# EUROPÄISCHE PATENTANMELDUNG

(11) **EP 2 022 692 A2**
(43) Veröffentlichungstag der Anmeldung: **11.02.2009**
(21) Anmeldenummer: 08161157.6
(22) Anmeldetag: 25.07.2008
(51) Int. Cl.: B60T 13/08, F16D 66/02

(54) **Vorrichtung und Verfahren zur Erkennung des Leerhubs von Fahrzeugbremsen auflaufgebremster Anhängerfahrzeuge**

(30) Priorität: 06.08.2007 DE 102007036907
(71) Anmelder: BPW Fahrzeugtechnik GmbH & Co. KG, 33104 Paderborn (DE); Reich GmbH Regel- und Sicherheitstechnik, 35713 Eschenburg-Wissenbach (DE)
(72) Erfinder: Joachim, Michael, 33129 Delbrück (DE); Manz, Stefan, 51588 Nümbrecht (DE); Müller, Matthias, 51105 Köln (DE); Schneider, Peter, 51597 Morsbach (DE)
(74) Vertreter: Christophersen, Ulrich Rudolf

(57) **Zusammenfassung**

Die Erfindung betrifft ein Vorrichtung und ein Verfahren zur Leerhuberkennung bei Fahrzeugbremsen auflaufgebremster Anhängerfahrzeuge, bei deren Betätigung die Reibbeläge erst nach Überwindung des Leerhubs mit ihrem Reibpartner in Eingriff gelangen.

Aufgabe des Erfindung ist es, eine solche Vorrichtung und ein solches Verfahren zur Erkennung des Leerhubs von Fahrzeugbremsen auflaufgebremster Anhängerfahrzeuge zu schaffen, durch welche in vergleichsweise kurzen Zeitabständen der Leerhub der Fahrzeugbremse mit ausreichender Genauigkeit erfasst wird.

Zur Lösung dieser Aufgabe wird bei einer Vorrichtung vorgeschlagen, dass diese elektrisch arbeitende Mittel (4) zur automatischen Erfassung des Leerhubs aufweist.

Bei einem Verfahren wird zur Lösung der Aufgabe vorgeschlagen, dass dieses durch eine automatische Erfassung des Leerhubs der Fahrzeugbremse mit einer erfindungsgemäßen Vorrichtung gekennzeichnet ist.

## Beschreibung

Die Erfindung betrifft eine Vorrichtung und ein Verfahren zur Leerhuberkennung bei Fahrzeugbremsen auflaufgebremster Anhängerfahrzeuge, bei deren Betätigung die Reibbeläge erst nach Überwindung eines Leerhubs mit ihrem Reibpartner in Eingriff gelangen.

Bei auflaufgebremsten Anhängerfahrzeugen ist üblicherweise im Bereich der Zugdeichsel eine Auflaufbremseinrichtung angeordnet, in welcher eine eine Kupplungseinrichtung zum Ankuppeln an dem Zugfahrzeug tragende Zugstange verschiebbar gehalten ist. Beim Abbremsen des Zugfahrzeugs verschiebt sich die Zugdeichsel gegenüber der Zugstange in Fahrtrichtung. Diese Relativbewegung wird zur Betätigung der Fahrzeugbremse des Anhängerfahrzeugs genutzt. Dabei wird die Relativbewegung von der an der Deichsel angeordneten Auflaufbremseinrichtung über ein Bremsgestänge zu den weiter hinten an der Fahrzeugachse angeordneten Fahrzeugbremsen übertragen.

Die Fahrzeugbremsen weisen ein voreingestelltes und teilweise über Nachstellelemente kontinuierlich nachgestelltes Lüftspiel, d.h. einen Abstand zwischen dem Reibbelag, etwa einem Bremsklotz, und dessen Reibpartner, beispielsweise einer Bremstrommel oder - scheibe, auf. Bei Betätigung der Bremse stellt sich eine Bremswirkung erst nach Überwinden des Lüftspiels ein, was zu einer gewissen zeitlichen Verzögerung führt. Eine weitere zeitliche Verzögerung ist bedingt durch das im Bremsgestänge enthaltene Spiel. Erst nach Überwindung des Bremsgestängespiels und des Lüftspiels der Fahrzeugbremse gelangen die Bremsbeläge mit ihrem Reibpartner in Eingriff, so dass das Anhängerfahrzeug abgebremst wird. Die Summe aus dem Lüftspiel und dem Bremsgestängespiel sowie weiterer im Zuspannweg der Bremse angeordneter, spielbehafteter Komponenten bildet insgesamt den Leerhub der Fahrzeugbremse, der bei jedem Bremsvorgang zunächst zu überwinden ist, bevor die Reibbeläge an ihrem Reibpartner, etwa einer Bremsscheibe oder -trommel, anliegen und das Fahrzeug abgebremst wird. Die Zeit, die zur Überwindung des Leerhubs erforderlich ist, ist die so genannte Ansprechzeit der Bremse.

Im Fahrbetrieb ist der Leerhub nicht konstant, sondern infolge von Bremsverschleiß oder am Bremsgestänge auftretendem Verschleiß Schwankungen unterworfen, wodurch sich auch die Ansprechzeit der Bremse ändert. Auch können Fehler bei der manuellen Einstellung des Leerhubs, z. B. nach einem Wechsel der Reibbeläge, Einfluss auf die Ansprechzeit der Bremse haben. Ein zu großer Leerhub und die mit diesem verbundenen längeren Ansprechzeiten können im Fahrbetrieb zu gefährlichen Situationen, beispielsweise bei Notbremsungen, führen, da die eigentliche Bremswirkung erst mit zeitlicher Verzögerung zur Bremsbetätigung erfolgt, wodurch sich lange Bremswege ergeben.

Von daher wird der Leerhub des Bremsgestänges von Zeit zu Zeit inspiziert und ggf. nachjustiert. Dies erfolgt manuell z.B. im Rahmen einer Fahrzeuginspektion, wozu am Bremsgestänge gezogen und der Weg gemessen wird, den das Bremsgestänge zurücklegt, bis die Bremsbeläge mit ihrem Reibpartner in Eingriff gelangen.

Diese von Zeit zu Zeit erfolgenden, manuellen Messungen des Leerhubs haben sich als nachteilig erwiesen. Zum einen sind die Wartungsintervalle bei modernen, auflaufgebremsten Anhängerfahrzeugen vergleichsweise lang, weshalb sich über diesen langen Zeitraum größere Änderungen des Leerhubs ergeben können. Zum anderen ist die Messgenauigkeit der manuell durchzuführenden Arbeiten vom Geschick des Wartungspersonals abhängig, was zu ungenauen oder fehlerhaften Messergebnissen führen kann.

Der Erfindung liegt die **Aufgabe** zugrunde, eine Vorrichtung und ein Verfahren der eingangs genannten Art zu schaffen, bei welchen in kurzen Laufzeitabständen der Leerhub der Fahrzeugbremse mit ausreichender Genauigkeit erfasst wird.

Zur **Lösung** dieser Aufgabe wird bei einer Vorrichtung der eingangs genannten Art vorgeschlagen, dass diese elektrisch arbeitende Mittel zur automatischen Erfassung des Leerhubs aufweist.

Die automatische Erfassung des Leerhubs mittels elektrisch arbeitender Erfassungsmittel macht eine regelmäßige, manuelle Überprüfung des Leerhubs überflüssig. Zudem ist die automatische Erfassung des Leerhubs unabhängig von den Wartungsintervallen des Anhängerfahrzeugs, weshalb der Leerhub in kürzeren Zeitabständen erfasst werden kann. Auch ist das Messergebnis nicht vom Geschick des Wartungspersonals abhängig.

In vorteilhafter Ausgestaltung wird vorgeschlagen, dass das oder die Mittel Elemente eines Zusatzbremssystems sind. Auflaufgebremste Anhängerfahrzeuge sind vielfach mit Zusatzbremssystemen ausgestattet, die die Fahrzeugbremse des auflaufgebremsten Anhängerfahrzeugs unabhängig von einer Bremsung des Zugfahrzeugs betätigen, beispielsweise zur Unterdrückung so genannter Schlingerbewegungen oder zur Verstärkung der Bremskraft. Wenn das oder die Mittel Elemente des Zusatzbremssystems sind, kann die Vorrichtung zur Erkennung des Leerhubs in das Zusatzbremssystem integriert sein, wodurch sich eine einfache, in das vorhandene System integrierte Bauweise ergibt.

Vorteilhaft ist eine Ausgestaltung, bei der die Erfassungsmittel eine dem Leerhub der Fahrzeugbremse entsprechende Weginformation und ein das Anliegen der Reibbeläge am Reibpartner anzeigendes Endsignal liefern. Durch die Weginformation ist die Größe des Leerhubs bestimmt. Das Endsignal zeigt das Anliegen der Reibbeläge und damit das Ende der Leerhubmessung an, wonach die Messung sofort beendet bzw. die Reibbeläge von ihrem Reibpartner wieder entfernt werden können, so dass die Leerhuberfassung ohne nennenswerte Bremswirkung bleibt und auch bei laufender Fahrt durchführbar ist.

In Ausgestaltung der Erfindung ist zur Verknüpfung der Weginformation und des Endsignals eine Überwachungseinheit vorgesehen ist, die die beiden Signale bzw. Informationen zu einem Leerhubwert verknüpft.

Von Vorteil ist eine Ausgestaltung, bei der die Erfassungsmittel den Leerhub über ein Betätigungselement eines Zusatzbremssystems erfassen. Vorteilhaft ist in diesem Zusammenhang, wenn das Betätigungselement ein Elektromotor ist, über den sich auf einfache Weise sowohl die Weginformation wie auch das über die Anlage der Reibbeläge an ihrem Reibpartner informierende Endsignal abgreifen lassen.

In weiterer Ausgestaltung des Erfindungsgedankens wird im Hinblick auf eine einfache und gleichzeitig ausreichend genaue Messung vorgeschlagen, dass über eines der Erfassungsmittel anhand der Umdrehungen der Motorwelle des Elektromotors eine dem Leerhub entsprechende Weginformation erfassbar ist.

In diesem Zusammenhang ist es von Vorteil, wenn das Erfassungsmittel einen auf der Motorwelle mitdrehend angeordneten Drehgeber und einen dessen Umdrehungen erfassenden, feststehenden Drehnehmer aufweist. Ferner ist es von Vorteil, wenn der Drehgeber mit einem Magneten versehen ist, der berührungslos mit dem feststehenden Drehnehmer zusammenwirkt. Über den Magneten lässt sich der so genannte Hall-Effekt zur Erfassung der Umdrehungen ausnutzen und eine berührungslose Messung realisieren, so dass das so gebildete Erfassungsmittel verschleißfrei arbeitet.

Vorteilhaft ist das Anliegen der Reibbeläge an dem Reibpartner der Fahrzeugbremse über ein weiteres Erfassungsmittel anhand eines Anstiegs der Stromstärke des Elektromotors detektierbar. Durch die beim Anliegen der Bremsbeläge am Reibpartner am Elektromotor anliegende höhere Last steigt die Stromstärke des Motors unverzüglich an, wodurch ein elektrisches Signal gegeben ist, durch das sich das Ende des Leerwegs sofort erkennen lässt.

Vorteilhaft ist die Vorrichtung mit einem Beschleunigungssensor zur Erfassung der Beschleunigungen in Längsrichtung des Fahrzeugs versehen. Die Beschleunigungswerte können als Startsignal zur Durchführung einer Leerhuberfassung dienen, etwa indem jeweils mit Erreichen eines vorbestimmten Wertes eine Messung erfolgt. Eine Messung kann vorteilhaft einmal zu Beginn jeder Fahrt erfolgten, wodurch sich vergleichsweise kurze Messintervalle ergeben. Hierzu kann eine Fahrbeginnerkennung vorgesehen sein, die anhand einer Erstbestromung den Fahrbeginn erkennt. Nach der ersten Bestromung durch das Zugfahrzeug kann die Leerhuberfassung dann bei Erreichen eines bestimmten Beschleunigungswertes, etwa bei Einsetzen der ersten Vorwärtsfahrt erfolgen.

Vorteilhaft ist die Vorrichtung mit einer Anzeigeeinheit versehen, die dem Fahrzeugführer den erfassten Leerhub anzeigt, so dass dieser stetes über den aktuellen Leerhub informiert ist. Zum Beispiel kann die Anzeigeeinheit den Leerhub als Wegangabe, vorzugsweise in Millimetern, anzeigen. Auf diese Weise erhält der Fahrer ein genaues Bild vom momentanen Leerhub der Bremsanlage.

Alternativ ist es möglich, dass die Anzeigeeinheit als binäre Information anzeigt, ob der Leerhub noch innerhalb vorgegebener Grenzwerte liegt, oder nicht. Beispielsweise durch eine Alarmlampe kann bei Aufleuchten angezeigt werden, dass der Leerhub außerhalb der vorgegebenen Grenzwerte liegt. In diesem Fall sollte der Fahrzeugführer eine Werkstatt aufsuchen und den Leerhub nachjustieren lassen.

Vorteilhaft ist auch eine Positionserkennung zur Erkennung einer Ausgangsposition vorgesehen, von welcher aus der Leerhub erfasst wird. Bei Erreichen bzw. Erkennen dieser Ausgangsposition wird die Vorrichtung zunächst neu kalibriert, wonach dann eine genaue Messung erfolgen kann. Für eine einfache Bauweise ist es von Vorteil, wenn diese Positionserkennung einen Tastschalter aufweist. Tastschalter sind als Standard-Bauteile erhältlich und können zuverlässig zur Positionserkennung bzw. zur Kalibrierung eines Messsystems bei Betätigung des Tastschalters genutzt werden.

Zur **Lösung** der Aufgabe wird bei einem Verfahren der eingangs genannten Art vorgeschlagen, dass dieses durch eine Erfassung des Leerhubs der Fahrzeugbremse mit einer Vorrichtung der vorstehend beschriebenen Art gekennzeichnet ist.

Durch die automatisch erfolgende Erfassung des Leerhubs entfällt der bislang erforderliche manuelle Wartungsaufwand. Es können ohne größeren Aufwand kurze Messintervalle eingehalten werden. Auch ist das Messergebnis nicht vom Geschick des Wartungspersonals abhängig.

In Ausgestaltung des erfindungsgemäßen Verfahrens wird vorgeschlagen, dass die Erfassung des Leerhubs während der Fahrt erfolgt. Durch Messung während der Fahrt kommt es zu keinen zeitlichen Verzögerungen durch die Messung, wie diese etwa mit manuellen Messungen im Rahmen von Wartungsinspektionen auftreten. Unter dem Begriff "während der Fahrt" sind nicht nur solche Fahrzeugzustände zu verstehen, bei denen sich die Räder des Fahrzeugs drehen. Hierunter fallen alle Situationen in denen das Anhängerfahrzeug über das Zugfahrzeug mit elektrischer Spannung versorgt ist, beispielsweise nach Herumdrehen des Zündschlüssels im Zugfahrzeug.

Von Vorteil ist in diesem Zusammenhang, wenn die Erfassung zu Beginn jeder Fahrt erfolgt, wodurch sich kurze Messintervalle ergeben.

Weitere Einzelheiten und Vorteile einer erfindungsgemäßen Vorrichtung sowie des Verfahrens zur Leerhuberkennung werden nachfolgend anhand eines in den Figuren dargestellten Ausführungsbeispiels erläutert. Darin zeigen:
- Figur 1: eine perspektivische Ansicht des vorderen Endes einer Zugdeichsel eines auflaufgebremsten Anhängerfahrzeugs mit Zusatzbremssystem,
- Figur 2: eine weitere Ansicht der Zugdeichsel aus Figur 1,
- Figur 3: eine perspektivische Ansicht einer Zugdeichsel unter Weglassung eines Abdeckelements,
- Figur 4: in schematischer Ansicht eine Draufsicht auf Teile eines auflaufgebremsten Anhängerfahrzeugs,
- Figur 5: eine perspektivische Ansicht eines Zusatzbremssystems von der einen Seite her betrachtet,
- Figur 6: eine perspektivische Ansicht eines Zusatzbremssystems von der anderen Seite her betrachtet und
- Figuren 7 bis 11: perspektivische Ansichten eines Zusatzbremssystems bei geöffnetem Gehäuse in verschiedenen Montagestadien.

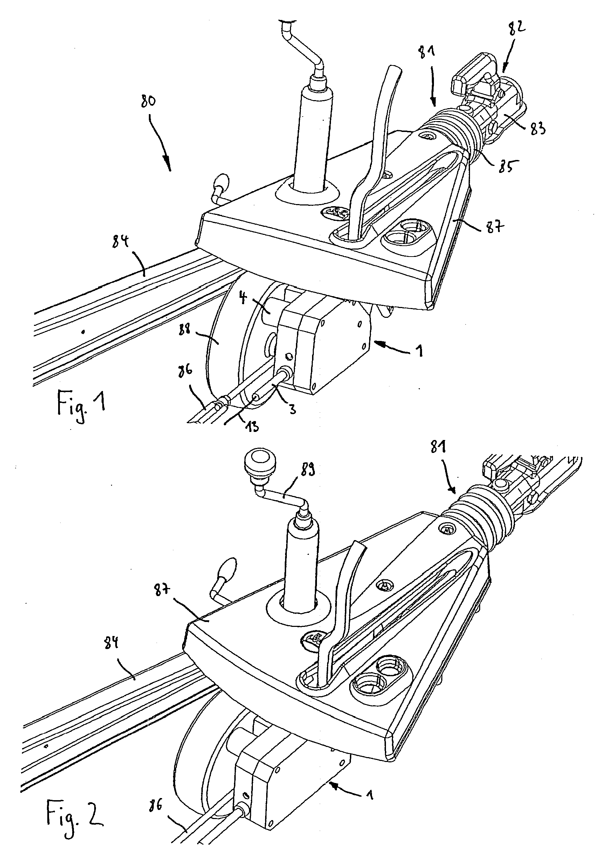

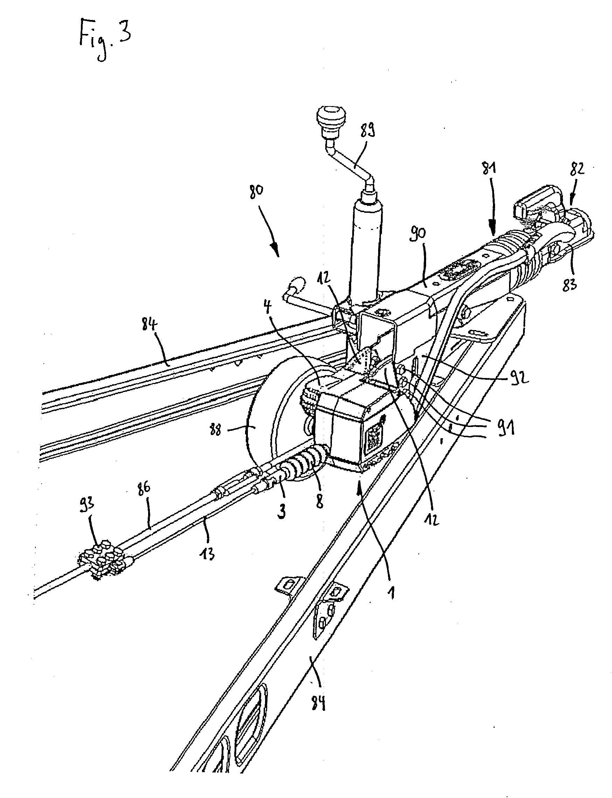

In den Figuren 1 und 2 dargestellt ist in perspektivischer Ansicht das vordere Ende einer Zugdeichsel 80 eines auflaufgebremsten Anhängerfahrzeugs mit einem Zusatzbremssystem 1. Die Auflaufbremse 81 befindet sich an einer mit einer Kupplungseinrichtung 82 versehenen Zugstange 83. Die Zugstange 83 ist gegenüber der Zugdeichsel, die aus zwei triangelförmig aufeinander zu laufenden Holmen 84 besteht, verschiebbar. Von den Holmen 84 ist in den Figuren 1 und 2 nur der linke dargestellt. Ein zweiter Fahrzeugholm 84 erstreckt sich symmetrisch zur Fahrzeugmittelachse auf der anderen Seite der Zugdeichsel 80, vgl. Fig. 3.

Das Anhängerfahrzeug wird über die vorne an der Zugdeichsel 80 vorgesehene Kupplungseinrichtung 82 an einer Anhängerkupplung eines Zugfahrzeugs angekuppelt. Wenn das Zugfahrzeug abgebremst wird, verschiebt sich im Bereich der Auflaufbremseinrichtung 81 die Zugdeichsel aufgrund der Massenträgheit des Anhängerfahrzeugs gegenüber der Zugstange 83. Diese Relativbewegung wird von der Auflaufbremseinrichtung 81, von der nur ein die innen liegenden Komponenten der Auflaufbremse vor Verunreinigungen schützender Balg 85 zu erkennen ist, durch Zug an einem Bremsgestänge 86 in den Achsenbereich des Anhängerfahrzeugs weitergeleitet und dort über eine Ausgleichswaage an die in den Endbereichen der Fahrzeugachse angeordneten Fahrzeugbremsen weitergeleitet und zur Bremsbetätigung genutzt. Diese Bremsbetätigung des Anhängerfahrzeugs erfolgt entsprechend der Bremsverzögerung des Zugfahrzeugs.

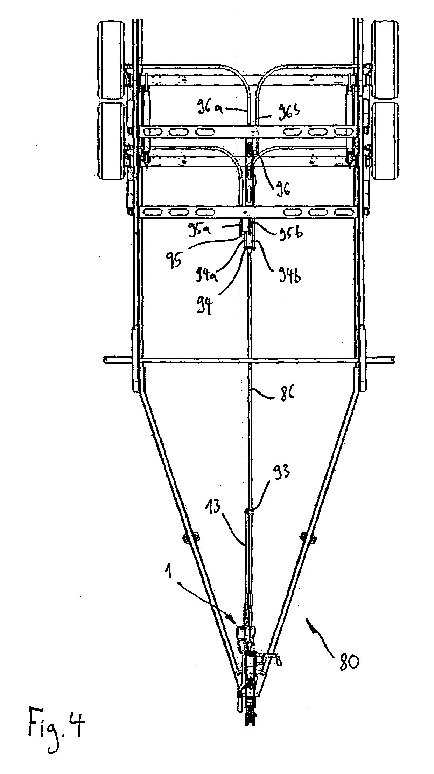

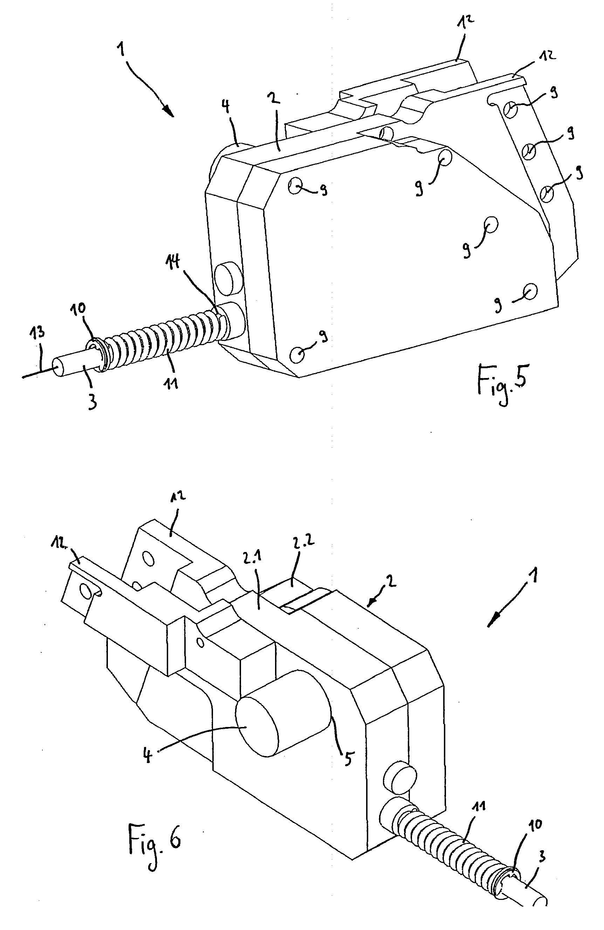

In den Figuren 3 und 4 ist das vordere Ende der Zugdeichsel 80 ohne die in den Figuren 1 und 2 dargestellte Abdeckung 87 dargestellt. Wie sich der Darstellung in Fig. 3 entnehmen lässt, befindet sich unterhalb der Abdeckung 87 das Auflaufbremsgehäuse 90 der Auflaufbremseinrichtung 81. Das Auflaufbremsgehäuse 90 wird gebildet von einem im Querschnitt in etwa U-förmigen Blechprofil. Am hinteren Ende des Auflaufbremsgehäuses 90 ist das Zusatzbremssystem 1 an diesem festgelegt. Das Gehäuse des Zusatzbremssystems 1 weist in Fahrtrichtung betrachtet zwei parallel zueinander ausgerichtete Flansche 12 mit beim Ausführungsbeispiel jeweils drei durchgängigen Montagebohrungen 9 auf, vgl. auch Fig.5. Die Flansche 12 sind von fahrzeughinten her in das Profil des Auflaufbremsgehäuses 90 bzw. in das Profil eines unterhalb des Auflaufbremsgehäuses 90 angeordneten Gehäuses 92, in dem ein Umlenkhebel für das Bremsgestänge 86 untergebracht ist, hinein geschoben und über drei sich quer zur Fahrtrichtung durch die am Flansch 12 vorgesehenen Bohrungen 9 erstreckende Montagebolzen 91 mit diesem verbunden.

Aufgrund dieser Befestigung eignet sich das Zusatzbremssystem 1 auch als Nachrüstlösung für bereits im Betrieb befindliche Anhängerfahrzeuge. Hierzu müssen lediglich auf beiden Seiten des Gehäuses 92 jeweils drei Bohrungen in dieses eingebracht werden. Danach kann das Zusatzbremssystem 1 in das Gehäuse 92 eingeschoben und durch Verschraubungen 91 sicher an diesem festgelegt werden. Das Gehäuse 92 muss nicht, wie in Fig. 3 dargestellt, zweistückig zu dem Auflaufbremsgehäuse 90 ausgeführt sein. Ebenso ist es möglich, das Auflaufbremsgehäuse 90 und das Gehäuse 92 durch eine Verlängerung der Schenkel des U-Profils des Auflaufbremsgehäuses 90 einstückig miteinander auszubilden. Auch die das Stützrad 88 tragende Kurbel 89 ist seitlich an das Auflaufbremsgehäuse 90 angeflanscht. Von daher ist es möglich, dass der Hersteller der Auflaufbremseinrichtung 81 diese mit einem Zusatzbremssystem 1 und/oder der Kurbel 89 als vormontierte Einheit ausstattet und der Fahrzeugbauer, beispielsweise ein Hersteller von Wohnanhängern, diese Elemente nicht separat zu montieren braucht, wodurch sich eine Montagevereinfachung für den Fahrzeugbauer ergibt.

Neben der Festlegung des Zusatzbremssystems 1 am Auflaufbremsgehäuse 90 bzw. am Gehäuse 92 ist in Fig. 3 auch die Kopplung des über das Zusatzbremssystem 1 bewegbaren Seilzugs 13 am Bremsgestänge 86 der Auflaufbremse dargestellt. Der Seilzug 13 verläuft parallel zum Bremsgestänge 86 und ist über ein klemmenartiges Montageelement 93 an diesem festgelegt.

Wie sich der ein zweiachsiges Anhängerfahrzeug darstellenden Fig. 4 entnehmen lässt, befindet sich das Montageelement 93 in Fahrzeugrichtung betrachtet vor der ersten Ausgleichswaage 94. Bei der Ausgleichswaage 94 handelt es sich um eine Art Wippe, die die am Bremsgestänge 86 anliegende Zugkraft auf zwei Zweige 94a, 94b verteilt. Der eine Zweig 94a dient zur Betätigung der Bremsen der vorderen Achse des Doppelachsaggregats. Hierzu ist auch der Zweig 94a mit einer Ausgleichswaage 95 versehen, über die sich die Zugkraft auf zwei Zweige 95a, 95b verteilt, die jeweils einer Fahrzeugbremse der vorderen Achse zugeordnet sind. Zur Betätigung der Bremsen der hinteren Fahrzeugachse ist der Zweig 94b vorgesehen. Auch dieser verzweigt sich über eine Ausgleichswaage 96 in zwei weitere Zweige 96a, 96b, über welche die Betätigung der rechten und linken Bremse der hinteren Fahrzeugachse erfolgt. Der Seilzug 13 ist vorzugsweise vor der ersten Ausgleichswaage 94 über das Montageelement 93 mit dem Bremsgestänge 86 gekoppelt.

Einzelheiten der Vorrichtung und des Verfahrens zur Leerhuberkennung werden nachfolgend unter Zuhilfenahme der Figuren 5 bis 11 erläutert, in denen ein Ausführungsbeispiel der Erfindung dargestellt ist, bei dem elektrisch arbeitende Erfassungsmittel 4a, 4b auf einen als Betätigungselement eines Zusatzbremssystems 1 dienenden Elektromotor 4 zugreifen. Die Erfindung ist auf solche Ausführungen jedoch nicht beschränkt und kann im Aufbau auch einfacher gehalten sein.

Wie die Darstellungen in den Figuren 5 und 6 erkennen lassen, weist das Zusatzbremssystem 1 ein aus zwei Gehäusehälften 2.1, 2.2 zusammengesetztes Gehäuse 2 auf, aus dem eine Betätigungsstange 3 axial verschiebbar nach fahrzeughinten herausgeführt ist. Am aus dem Gehäuse 2 ragenden Ende der Stange 3 ist ein Seilzug 13 schematisch angedeutet, über den das Zusatzbremssystem 1 unter flachem Winkel am Bremsgestänge 86 angreift, vgl. auch Fig. 3. Über das Zugseil 13 wird in etwa parallel zur Richtung des Bremsgestänges 86 an diesem gezogen, und zwar unabhängig von einer Relativbewegung im Bereich der Auflaufbremseinrichtung 81.

Aus einer Öffnung 5 der Gehäusehälfte 2.1 ragt ein Elektromotor 4 heraus, der einerseits zur Bestimmung des Leerhubs und andererseits zur Betätigung des Zusatzbremssystems 1 dient. Im vorderen Bereich des Zusatzbremssystems 1 ist eine Montageöffnung 8 zum Festlegen des Zusatzbremssystems 1 an der Deichsel vorgesehen. Darüber hinaus ist eine Vielzahl von Montagebohrungen 9 vorgesehen.

Am hinteren Ende des Gehäuses 2 ist die Stange 3 aus einer Öffnung 14 aus dem Gehäuse 2 herausgeführt. Zwischen einem an der Stange 3 festgelegten Ring 10 und dem Gehäuse 2 bzw. der Öffnung 14 ist eine Feder 11 vorgesehen, die die Stange 3 in Richtung der dargestellten Ausgangsstellung, d.h. nach hinten, drückt. Ebenfalls zwischen dem Ring 10 und der Öffnung 14 ist ein in den Figuren nicht dargestellter Faltenbelag angeordnet, der das Gehäuseinnere und die Feder 11 vor Verunreinigungen, etwa Staub oder Schmutzwasser schützt.

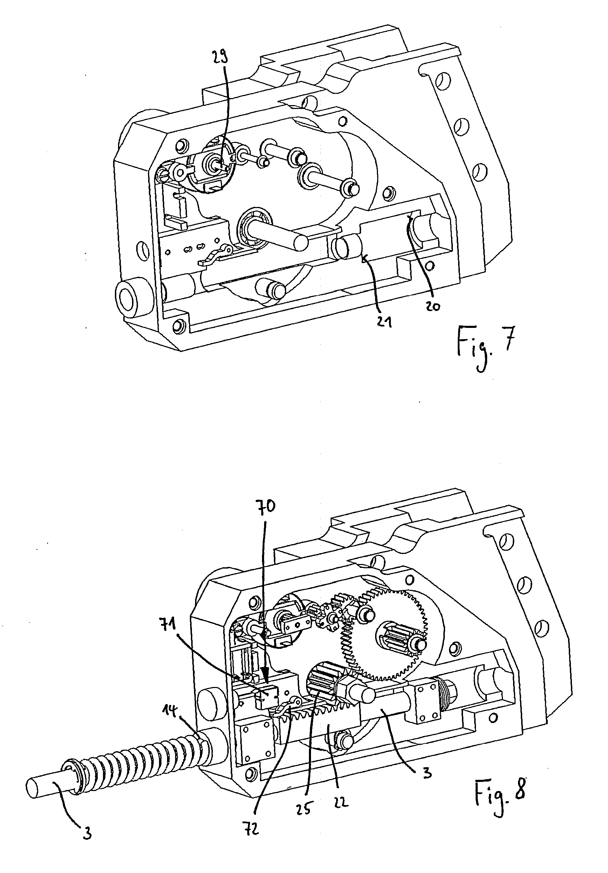

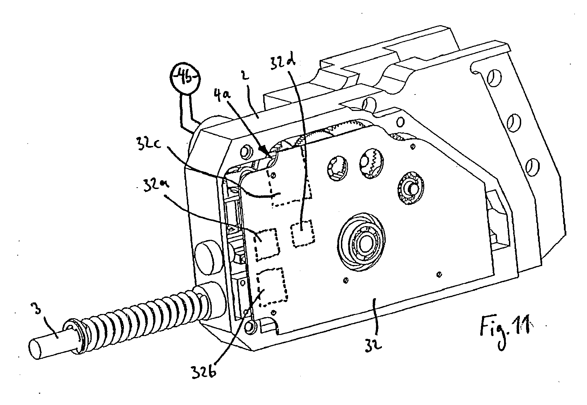

Einzelheiten des Aufbaus des Zusatzbremssystems 1 lassen sich den Darstellungen in den Figuren 7 bis 11 entnehmen, die verschiedene Montagestadien zeigen. In Figur 7 dargestellt ist ein Montagestadium, bei dem noch relativ wenige Bauteile des Zusatzbremssystems 1 montiert sind, wobei in Figur 11 alle wesentlichen Bauteile montiert sind.

Nachfolgend werden zunächst Einzelheiten der Funktionsweise des Zusatzbremssystems 1 erläutert, bevor dann auf die Funktion der Mittel 4a, 4b zur Erfassung des Leerhubs der Bremse eingegangen werden wird.

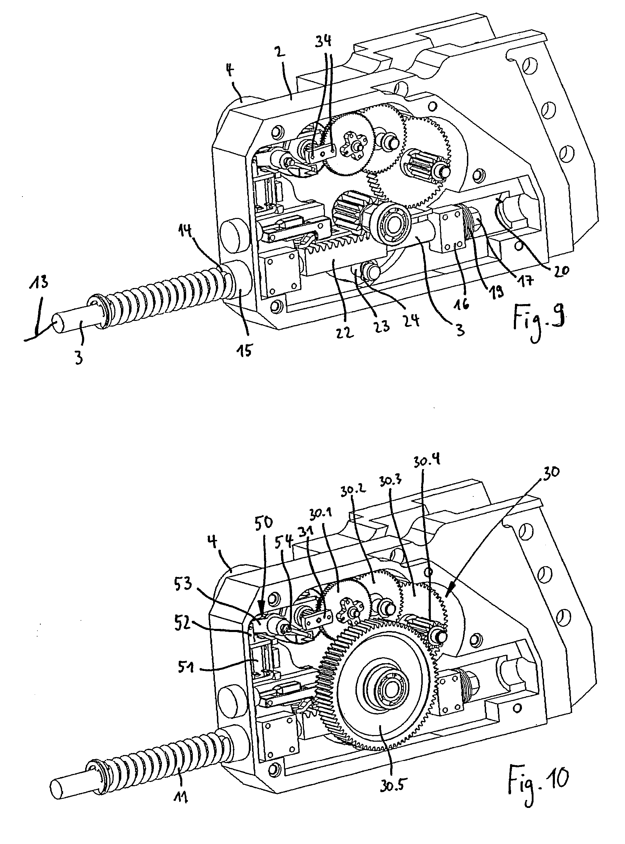

Wie sich der Darstellung in Figur 9 entnehmen lässt, ist die Stange 3 über eine z. B. als Gleitlagerhülse ausgebildete Hülse 15 in das Gehäuseinnere hineingeführt. Die Stange 3 weist fest eine Zahnstange 22 auf, die sich über einen gewissen Längsbereich der Stange 3 erstreckt. Dahinter ist die Stange 3 durch ein weiteres Lager 16 geführt, das beim Ausführungsbeispiel als Gleitlager ausgebildet ist. Die Stange 3 weist an ihrem Ende einen Gewindeabschnitt für eine Mutter 17 auf. Zwischen der Mutter 17 und einem an der Stange 3 ausgebildeten Absatz ist eine Vielzahl von Tellerfedern 19 über die Mutter 17 klemmend gehalten. Das auf diese Weise auf der Zugstange 3 gehaltene Paket von Tellerfedern 19 bildet eine radiale Erweiterung der Zugstange 3, die zwischen zwei axialen Anschlagflächen 20 und 21 des Gehäuses 2 hin und her bewegbar ist, vgl. auch Fig. 5. In den Figuren dargestellt ist die Ausgangsstellung des Zusatzbremssystems 1, in der die Tellerfedern 19 an der vorderen Anschlagfläche 21 anliegen. In dieser Stellung ist die Stange 3 maximal aus dem Gehäuse 2 herausbewegt. Die Tellerfedern 19 dienen zur Dämpfung der Anschlagbewegung.

Über den als Bremsbetätigungselement dienenden Elektromotor 4 kann die mit dem Bremsgestänge 86 gekoppelte Zugstange 3 weiter in das Gehäuseinnere hineinbewegt werden, wodurch über den Seilzug 13 an dem Bremsgestänge 86 gezogen und die Bremse betätigt wird, vgl. auch Fign. 1 und 3.

Wie die Darstellung in Fig. 10 erkennen lässt, ist der Elektromotor 4 über ein Getriebe 30, bestehend aus einer Vielzahl von Zahnrädern 30.1 bis 30.5, mit der Zahnstange 22 über ein Ritzel 25 (vgl. Fig. 8) gekoppelt, wodurch die Drehungen der Motorwelle des Elektromotors 4 in eine translatorische Bewegung der Stange 3 überführt werden. Bei dem Getriebe 30 handelt es sich um ein Getriebe mit einer Kraftübersetzung bzw. Weguntersetzung, beim Ausführungsbeispiel mit einem Verhältnis von 1 : 447, so dass ein vergleichsweise schwacher Elektromotor 4 als Betätigungselement ausreicht.

Unter dem Ritzel 25 kämmt die Zahnstange 22. Diese ist nach unten hin über ein Gleitlager 23 abgestützt, das über einen Ring 24 an einem Gehäusezapfen gehalten wird.

Bei Betätigung der Fahrzeugbremse über das Zusatzbremssystem 1 z.B. infolge einer erkannten Schlingerbewegung wird zunächst der Elektromotor 4 bestromt. Die Drehungen der Motorwelle 29 werden über das Getriebe 30 auf den Zahnstangenabschnitt 22 der Zugstange 3 übertragen. Die Zugstange 3 wird in das Gehäuse 2 hinein bewegt und das Bremsgestänge 86 (vgl. Fig. 1) über den Seilzug 13 mit einer Zugkraft beaufschlagt, die nach Überwindung des Leerhubs zum Zuspannen der Bremse und damit zum Abbremsen des Fahrzeugs führt. Die Bremskraft bzw. Bremsstellung wird eine gewisse Zeit lang aufrecht erhalten, bis die Schlingerbewegungen des Anhängerfahrzeugs abgeklungen sind und sich die Querbeschleunigungen des Anhängerfahrzeugs wieder auf normale Werte eingependelt haben. Zur Aufrechterhaltung der Bremsstellung kann der Elektromotor 4 die entsprechende Haltekraft aufbringen. Alternativ oder zusätzlich ist es zur Entlastung des Elektromotors 4 möglich, eine Haltevorrichtung 50 (vgl. Fig. 10) zum Halten der Motorwelle 29 (vgl. Figur 7) vorzusehen, die ein Verdrehen der Motorwelle 29 aus der Bremsstellung blockiert.

Einzelheiten der Haltevorrichtung 50 werden nachfolgend unter Bezugnahme auf Figur 10 erläutert. Die Haltevorrichtung 50 ist seitlich neben der Motorwelle 29 angeordnet und setzt sich zusammen aus einem Elektromagneten 51, über den ein Stift 52 bewegbar ist. Der Stift 52 ist an seinem freien Ende geschlitzt und dient zur Aufnahme des einen Endes einer über eine Achse 54 schwenkbar am Gehäuse 2 angelenkten Wippe 53. Bei Bestromung des Elektromagneten 51 verschiebt sich der Stift 52 in axialer Richtung, wodurch das eine Ende der Wippe 53 gemeinsam mit dem Stift 52 bewegt wird. Das andere Ende der Wippe schwenkt aufgrund der Anlenkung um die Achse 54 aus und blockiert über einen an der Motorwelle 29 befestigten Drehgeber 31 ein Verdrehen der Motorwelle. Nach abgeschlossener Bremsung wird die Stromversorgung des Elektromagneten 51 unterbrochen, so dass der Bolzen 52 in seine Ausgangslage zurückbewegt und die Motorwelle 29 wieder freigegeben wird, wonach das Zusatzbremssystem 1 über die Feder 11 wieder in die Ausgangsstellung versetzt wird. Dies wird durch den selbsthemmungsfreien Aufbau des Getriebes 30 ermöglicht bzw. zugelassen.

In dem Gehäuse 2 des Zusatzbremssystems 1 ist, wie Fig. 8 erkennen lässt, darüber hinaus eine Positionserkennung 70, bestehend aus einem Tastschalter 71 und einer weiteren Wippe 72, vorgesehen, welche die in Figur 8 dargestellte Ausgangsstellung der Zugstange 3 erkennt. Wenn die Zahnstange 22 sich nämlich in Richtung der Gehäuseöffnung 14 bewegt, beginnt die Wippe 72 zu schwenken und betätigt den Tastschalter 71. Das auf diese Weise gewonnene elektrische Signal dient zur Erkennung der Ausgangsstellung. Ausgehend von dieser Position erfolgt die Bestimmung des Leerhubs.

Neben der mechanischen Betätigung des Zusatzbremssystems 1 erfolgt über den Elektromotor 4 die Bestimmung des Leerhubs der Fahrzeugbremse.

Der Leehub der Fahrzeugbremse setzt sich zusammen aus dem Spiel der bei Bremsbetätigung im Kraftfluss liegenden Elemente, also im Wesentlichen dem zwischen den Reibbelägen und deren Reibpartner voreingestellten Lüftspiel und dem Spiel des Bremsgestänges. Die Betätigung der Bremse erfolgt daher zunächst bei vergleichsweise geringer Kraft durch Zug an dem Bremsgestänge. Erst wenn die Reibbeläge nach Überwindung des Leerhubs an ihrem Reibpartner anliegen, steigt die Kraft schlagartig an.

Zur Messung des Leerhubs werden über ein erstes Erfassungsmittel 4a zunächst die Umdrehungen der Motorwelle 29 des Elektromotors 4 als Weginformation erfasst. Das erste Erfassungsmittel 4a weist einen Drehgeber 31 und einen gegenüber liegenden Drehnehmer 32c auf, vgl. Fign. 10 und 11. Die Motorwelle 29 ist stirnseitig mit dem mitdrehenden Drehgeber 31 versehen, dessen Umdrehungen von dem gehäusefest auf einer Platine 32 gehaltenen Drehnehmer 32c erfasst werden, vgl. auch Fig. 9. Der als Rotor ausgebildete Drehgeber 31 und der feststehende Drehnehmer 32c arbeiten berührungslos nach dem so genannten Hall-Effekt. Hierzu ist der Drehgeber 31 mit Magneten 34 versehen, die sich gegenüber dem Drehnehmer 32c bewegen und so Einfluss auf die am Drehnehmer erfasste Hall-Spannung nehmen. Beim Ausführungsbeispiel sind zwei um 180° gegenüberliegend angeordnete Magnete 34 vorgesehen (vgl. Fig. 9), wodurch auch Halbkreisdrehungen des Drehgebers 31 erfassbar sind. Sollte eine noch größere Genauigkeit gewünscht sein, müsste der Drehgeber 31 mit weiteren winkelversetzt angeordneten Magneten 34 versehen werden. Wegen der Weguntersetzung des Getriebes 30 haben sich beim Ausführungsbeispiel zwei Magnete 34 jedoch als ausreichend genau erwiesen.

Die anhand der Umdrehungen gewonnene Information reicht jedoch zur Leerhuberkennung noch nicht aus. Erforderlich ist ein Informationssignal, das das Anliegen der Reibbeläge am Reibpartner und damit das Ende des Leerhubs anzeigt. Hierzu wird über ein zweites, in Figur 11 nur schematisiert eingezeichnetes Erfassungsmittel 4b die Motorstromstärke des Elektromotors 4 erfasst. Denn sobald die Bremsbeläge nach Überwindung des Leerhubs mit ihrem Reibpartner in Anlage gelangen, erhöht sich die an der Motorwelle 29 anliegende Last deutlich. Dieser Lastanstieg führt zu einem ebenso deutlichen Anstieg der Motorstromstärke.

Bei dem Erfassungsmittel 4b handelt es sich um ein Amperemeter, das als separates Bauteil innerhalb oder außerhalb des Gehäuses 2 des Zusatzbremssystems 1 oder auf der Platine 32 untergebracht sein kann.

Durch Verknüpfung der durch die Motorumdrehungen gewonnenen Weginformation und des anhand der Motorstromstärkeanstiegs vorliegenden elektrischen Endsignals ist der Leerhub der Fahrzeugbremse bestimmt.

Die Anzahl der Motorumdrehungen bzw. die Drehungen der Motorwelle 29 entspricht unter Berücksichtigung der Übersetzung des Getriebes 30 einer bestimmten Weglänge. Ausgehend von der Ausgangsstellung können die Umdrehungen der Motorwelle 29 zur Abstandsmessung bzw. zur Messung des Leerhubs herangezogen werden. Nach Überwindung des Leerhubs legen sich die Bremsbeläge an ihrem Reibpartner an, was zu einem deutlichen Anstieg der Motorstromstärke führt, womit die Messung beendet wird. Die auf diese Weise gewonnene Information über den Leerhub der Bremse liegt anhand des Stromanstiegs und der bis zu diesem zurückgelegten Motorumdrehungen in Form elektrischer Signale vor. Diese werden von einer auf der Platine 32 angeordneten Überwachungseinheit 32b ausgewertet und zu einem einzigen elektrischen Signal verknüpft, vgl. Fig. 11.

Dieses wird dem Fahrzeugführer über eine Anzeigeeinheit zur Kenntnis gebracht, beispielsweise eine Anzeige mit einer Wegangabe, bei der der Fahrzeugführer eine genaue Information über den Leerhub, beispielsweise als Millimeterangabe, erhält. Oftmals ist es für den Fahrzeugführer jedoch bereits ausreichend, wenn er weiß, ob sich der Leerhub noch innerhalb vorgegebener Grenzwerte bewegt, oder ob er zur Sicherheit eine Nachstellung des Leerhubs vornehmen lassen sollte. Hierfür reicht bereits eine den Leerhub als binäre Information wiedergebende Anzeigeeinheit aus, etwa in Form eines Lämpchens oder einer Leuchtdiode.

Auf der Platine 32 ist neben der Überwachungseinheit 32b auch ein Querbeschleunigungssensor 32a zur Erfassung von Schlingerbewegungen des Anhängerfahrzeugs und ein Längsbeschleunigungssensor 32d vorgesehen, der die Fahrzeugbeschleunigung in Fahrzeuglängsrichtung ermittelt. Anhand der vom Längsbeschleunigungssensor 32d ermittelten Längsbescheunigung kann die Überwachungseinheit 32b auch auf das Einsetzen einer Vorwärtsfahrt schließen. Das Einsetzen einer Vorwärtsfahrt kann als Startsignal zum Beginn einer Leerhubmessung herangezogen werden. Um allerdings nicht bei jeder Vorwärtsfahrt eine solche Messung durchzuführen ist eine in den Figuren nicht dargestellte Fahrbeginnerkennung vorgesehen, die anhand einer Erstbestromung der Vorrichtung den Beginn einer Fahrt erkennt, beispielsweise bei Betätigung des Zündschlosses. Nach erkanntem Fahrbeginn erfolgt die Leerhubmessung dann bei Einsetzen der ersten über den Längsbeschleunigungssensor 32d erkannten Vorwärtsfahrt.

Mit der vorstehend beschriebenen Vorrichtung und dem zugehörigen Verfahren lässt sich der Leerhub der Fahrzeugbremse in vergleichsweise kurzen Intervallen mit ausreichender Genauigkeit automatisch kontrollieren, ohne dass dies für den Fahrzeugführer mit einem erhöhten Arbeits- oder Wartungsaufwand verbunden ist.

### Bezugszeichenliste

- 1: Zusatzbremssystem
- 2: Gehäuse
- 2.1: Gehäusehälfte
- 2.2: Gehäusehälfte
- 3: Stange, Zugstange
- 4: Betätigungselement, Elektromotor
- 4a: Erfassungsmittel, Wegmesser
- 4b: Erfassungsmittel,
- 5: Gehäuseöffnung
- 8: Balg
- 9: Montagebohrungen
- 10: Ring
- 11: Feder
- 12: Flansch
- 13: Seilzug
- 14: Öffnung
- 15: Hülse, Gleitlagerhülse
- 16: Gleitlager
- 17: Mutter
- 19: Tellerfeder
- 20: Anschlagfläche
- 21: Anschlagfläche
- 22: Zahnstange
- 23: Gleitlager
- 24: Ring
- 25: Ritzel
- 29: Motorwelle
- 30: Getriebe
- 30.1: Zahnrad
- 30.2: Zahnrad
- 30.3: Zahnrad
- 30.4: Zahnrad
- 30.5: Zahnrad
- 31: Drehgeber
- 32: Platine
- 32a: Sensorelement, Querbeschleunigungssensor
- 32b: Überwachungseinheit
- 32c: Drehnehmer
- 32d: Sensorelement, Längsbeschleunigungssensor
- 50: Haltevorrichtung
- 51: Elektromagnet
- 52: Stift, Bolzen
- 53: Wippe
- 54: Achse
- 70: Positionserkennung
- 71: Tastschalter
- 72: Wippe
- 80: Zugdeichsel
- 81: Auflaufbremse
- 82: Kupplungseinrichtung
- 83: Zugstange
- 84: Holm
- 85: Balg
- 86: Bremsgestänge
- 87: Abdeckung
- 88: Stützrad
- 89: Kurbel
- 90: Auflaufbremsgehäuse
- 91: Montagebolzen
- 92: Gehäuse
- 93: Montageelement
- 94: Ausgleichswaage
- 94a,b: Zweig
- 95: Ausgleichswaage
- 95a,b: Zweig
- 96: Ausgleichswaage
- 96a,b: Zweig

## Patentansprüche

1. Vorrichtung zur Leerhuberkennung für Fahrzeugbremsen auflaufgebremster Anhängerfahrzeuge, bei deren Betätigung die Reibbeläge erst nach Überwindung des Leerhubs mit ihrem Reibpartner in Eingriff gelangen,
**gekennzeichnet durch**
elektrisch arbeitende Mittel (4a, 4b) zur automatischen Erfassung des Leerhubs.

2. Vorrichtung nach Anspruch 1, **dadurch gekennzeichnet, dass** das oder die Mittel (4a, 4b) Elemente eines Zusatzbremssystems (1) sind.

3. Vorrichtung nach Anspruch 1 und/oder Anspruch 2, **dadurch gekennzeichnet, dass** die Mittel (4a, 4b) eine dem Leerhub der Fahrzeugbremse entsprechende Weginformation und ein das Anliegen der Reibbeläge am Reibpartner anzeigendes Endsignal liefern.

4. Vorrichtung nach Anspruch 3, **dadurch gekennzeichnet, dass** zur Verknüpfung der Weginformation und des Endsignals eine Überwachungseinheit (32c) vorgesehen ist.

5. Vorrichtung nach einem der Ansprüche 1 bis 4, **dadurch gekennzeichnet, dass** die Mittel (4a, 4b) den Leerhub über ein Betätigungselement (4), vorzugsweise einen Elektromotor, eines Zusatzbremssystems erfassen.

6. Vorrichtung nach Anspruch 5, **dadurch gekennzeichnet, dass** über eines der Erfassungsmittel (4a) anhand der Umdrehungen der Motorwelle (29) des Elektromotors (4) eine dem Leerhub entsprechende Weginformation erfassbar ist.

7. Vorrichtung nach Anspruch 6, **dadurch gekennzeichnet, dass** das Erfassungsmittel (4a) einen auf der Motorwelle (29) mitdrehend angeordneten Drehgeber (31) und einen dessen Umdrehungen erfassenden, feststehenden Drehnehmer (32c) aufweist.

8. Vorrichtung nach Anspruch 7, **dadurch gekennzeichnet, dass** der Drehgeber (31) mit einem Magneten (34) versehen ist, der berührungslos mit dem feststehenden Drehnehmer (32c) zusammenwirkt.

9. Vorrichtung nach Anspruch 5, **dadurch gekennzeichnet, dass** über das Erfassungsmittel (4b) das Anliegen der Reibbeläge an dem Reibpartner der Fahrzeugbremse anhand eines Anstiegs der Stromstärke des Elektromotors (4) detektierbar ist.

10. Vorrichtung nach einem der vorhergehenden Ansprüche, **gekennzeichnet durch** einen Bescheunigungssensor (32d) zur Erfassung von Bescheunigungen in Längsrichtung des Fahrzeugs.

11. Vorrichtung nach einem der vorangehenden Ansprüche, **gekennzeichnet durch** eine Fahrbeginnerkennung, die anhand einer Erstbestromung der Vorrichtung den Fahrbeginn erkennt.

12. Vorrichtung nach einem der vorhergehenden Ansprüche, **gekennzeichnet durch** eine den erfassten Leerhub anzeigende Anzeigeeinheit, die den Leerhub als Wegangabe, vorzugsweise in Millimetern, anzeigt.

13. Vorrichtung nach Anspruch 12, **dadurch gekennzeichnet, dass** die Anzeigeeinheit als binäre Information anzeigt, ob der Leerhub noch innerhalb vorgegebener Grenzwerte liegt, oder nicht.

14. Vorrichtung nach einem der vorhergehenden Ansprüche, **gekennzeichnet durch** eine Positionserkennung (70) zur Erkennung einer Ausgangsstellung, von welcher aus der Leerhub erfassbar ist.

15. Verfahren zur Leerhuberkennung für Fahrzeugbremsen auflaufgebremster Anhängerfahrzeuge, bei deren Betätigung die Reibbeläge erst nach Überwindung eines Leerhubs mit ihrem Reibpartner in Eingriff gelangen,
**gekennzeichnet durch**
eine Erfassung des Leerhubs der Fahrzeugbremse mit einer Vorrichtung nach einem der Ansprüche 1 bis 17.

16. Verfahren nach Anspruch 15, **dadurch gekennzeichnet, dass** die Erfassung des Leerhubs während der Fahrt oder zu Beginn jeder Fahrt erfolgt.
